# EUROPÄISCHE PATENTSCHRIFT

(11) **EP 1 128 992 B1**
(45) Veröffentlichungstag und Bekanntmachung des Hinweises auf die Patenterteilung: **22.09.2004**
(21) Anmeldenummer: 00965793.3
(22) Anmeldetag: 30.08.2000
(51) Int. Cl.: B60R 21/06

(54) **FALTBARE TRENNEINRICHTUNG**
FOLDABLE SEPARATING DEVICE
DISPOSITIF DE SEPARATION PLIABLE

(30) Priorität: 14.09.1999 DE 19944003
(43) Veröffentlichungstag der Anmeldung: 05.09.2001
(73) Patentinhaber: BOS GmbH & Co. KG, 73760 Ostfildern (DE)
(72) Erfinder: AMENT, Eduard, 82212 Herrsching-Breitbrunn (DE); EHRENBERGER, Marina, 73730 Esslingen (DE); SEEL, Holger, 71134 Aidlingen (DE); SPARRER, Henning, 73274 Notzingen (DE)
(74) Vertreter: Patentanwälte Rüger, Barthelt & Abel
(86) Internationale Anmeldenummer: PCT/DE2000/002949
(87) Internationale Veröffentlichungsnummer: WO 2001/019649

(56) Entgegenhaltungen:
- DE-A- 19 540 934
- DE-A- 19 641 794
- US-A- 5 215 288
- US-A- 5 427 486

## Beschreibung

Aus der DE-A-197 30 801 ist ein einfaches Sicherheitsnetz bekannt, dass dazu dient den Laderaum eines PKW von dem eigentlichen Fahrgastraum abzutrennen. Das Sicherheitsnetz wird vor der Öffnung aufgespannt, die zwischen der Oberkante der Rücksitzlehne oder den Vordersitzlehnen und dem Dachhimmel begrenzt ist. Durch diese Öffnung könnten bei einem Unfall Gegenstände aus dem Laderaum in den Fahrgastraum geschleudert werden und dort Menschen verletzen. Dies zu verhindern ist Zweck des bekannten Sicherheitsnetzes.

Das bekannte Sicherheitsnetz ist an seiner oberen und an seiner unteren Kante jeweils mit einer durchgehenden, rohrförmigen Strebe versehen. Die obere Strebe wird mit seitlichen verschiebbaren Verankerungsgliedern in entsprechende T-nutenartige Einhängetasche der Karosserie eingehängt, während die untere rohrförmige Strebe mit einfachen Bändern am Karosserieboden befestigt ist. Der Vorteil dieses bekannten Sicherheitsnetzes besteht darin, dass es wegen des fehlenden Gehäuses relativ leicht ist. Im Nichtgebrauchszustand kann das Sicherheitsnetz auf eine der beiden Streben aufgewickelt werden und nimmt dann entsprechend wenig Platz ein. Wegen der enormen Länge der Streben ist es allerdings nur schwer im Fahrzeug selbst zu verstauen und muss im Allgemeinen bei Nichtgebrauch häufig in der Garage aufgehoben werden.

Ausgehend hiervon ist es Aufgabe der Erfindung ein einfaches Sicherheitsnetz zu schaffen, das auch bei Nichtgebrauch leicht im Auto aufbewahrt werden kann.

Die US-A-5,427,846 zeigt ein Trennnetz für den Laderaum eines Pick-Up. Zu dem Trennnetz gehört das eigentliche Netzgebilde, das mit Hilfe von zwei oder drei Streben quer über den Laderaum aufgespannt gehalten wird. Jede der Streben enthält endseitig Stützplatten, die gegen die Innenseite der Ladebordwand angepresst werden. Hierzu sitzt wenigstens einer der Stützplatten jeder Strebe, an einem teleskopstück, das in der Strebe verschiebbar ist. Mit Hilfe einer Feder, die sich einerseits in dem Rohr und andererseits an dem Teleskopstütz abstützt, wird die betreffende Stützplatte mit Kraft gegen die Ladebordwand gedrückt.

Die Widerlager der Feder bilden jeweils Stifte, die durch die Feder hindurchführen. Durch Drehen des Teleskopstücks können die Stifte zusätzlich längs der Feder verstellt werden.

Diese Aufgabe wird erfindungsgemäß durch die Trenneinrichtung mit den Merkmalen des Anspruches 1 gelöst.

Die neue herausnehmbare Trenneinrichtung weist eine im Gebrauch obere und eine im Gebrauch untere Strebe auf, zwischen denen sich im Gebrauchszustand ein im Wesentlichen undehnbares Flächengebilde erstreckt, das mit der oberen und der unteren Strebe verbunden ist. Um bei Nichtgebrauch den Platzbedarf noch weiter zu verringern, sind die obere und die untere Strebe in ihrer wirksamen Länge auf mindestens 30% ihrer maximalen Länge zu verkürzen. Dadurch erhält das aufgerollte Paket der nichtgebrauchten Trenneinrichtung eine geringere Länge und lässt sich ohne Weiteres im Kofferraum unterbringen.

Eine besonders einfache Maßnahme, die Verkürzung der effektiven Länge zu erreichen, besteht darin, die Streben wenigstens einmal faltbar auszuführen. Hierzu kann die obere und die untere Strebe jeweils ein Scharnier mit einer Scharnierachse enthalten, wodurch die jeweilige Strebe in zwei Strebenabschnitte aufgeteilt wird.

Eine maximale Verringerung der effektiven Länge wird erreicht, wenn die Strebenabschnitte jeder Strebe untereinander gleich lang sind.

Um beim Aufwickeln des Flächengebildes auf die zusammengelegten Strebenabschnitte keine Spannungen in dem Flächengebilde zu erzeugen, sind die Scharniere in der Weise aufeinander ausgerichtet, dass bei aufgespannter Trenneinrichtung die beiden Scharniere auf einer Geraden liegen, die auf den beiden zueinander parallelen Streben senkrecht steht.

Damit die Streben im Falle eines Crashs, wenn Gegenstände aus dem Laderaum gegen die Trenneinrichtung geschleudert werden, ein möglichst großes Widerstandsmoment erzeugen, sind die Scharnierachsen bei aufgespannter Trenneinrichtung vorzugsweise horizontal ausgerichtet, d.h. die Scharnierachsen zeigen in Richtung parallel zur Fahrzeuglängsachse.

Darüber hinaus ist es zweckmäßig die Scharnierachse bezüglich der dem jeweiligen Scharnier benachbarten Strebenabschnitte derart versetzt anzuordnen, dass sich beim Falten die Strebenabschnitte ohne Weiteres in eine Parallellage zueinander bringen lassen.

Um hierbei eine Klemm- oder Quetschgefahr in der Nähe der Scharniere auszuschließen, ist der Versatz vorteilhafterweise groß, damit neben dem Scharnier ein Zwischenraum von 1,5 bis 2 cm verbleibt, wenn die Strebenabschnitte an ihrem von dem Scharnier abliegenden Ende aneinander stoßen.

Die Anordnung wird sehr robust und kostengünstig herstellbar, wenn das Scharnier ein einfaches Scharnier mit lediglich einer Scharnierachse ist.

Das Scharnier setzt sich im einfachsten Falle aus zwei Scharnierlaschen zusammen, die durch einen Scharnierbolzen unlösbar miteinander verbunden sind. Jede Scharnierlasche trägt einen Fortsatz, über den die Scharnierlasche mit den jeweiligen Strebenabschnitt starr und unlösbar verbunden ist. Die Fortsätze an den Scharnierlaschen sind so ausgerichtet, dass in einer Stellung die Scharnierlaschen auf einer Geraden liegen, die gegenüber der Scharnierachse seitlich versetzt ist, und zwar gemessen in einer Ebene, auf der die Scharnierachse senkrecht steht.

Die Handhabung der Trenneinrichtung wird wesentlich vereinfacht, wenn das Scharnier in wenigstens einer Stellung verriegelbar ist. Hierdurch wird die Strebe, die sich aus den Strebenabschnitten zusammensetzt wie eine starre, durchgehenden Strebe handhabbar, die sich leicht in den karosserieseitigen Aufnahmen einhängen lässt. Die Verriegelung kann eine rastbare Verriegelung sein oder eine formschlüssig verriegelbare Verriegelung. Die Stellung, in der die Verriegelung auftritt, ist zweckmäßiger Weise die Stellung, in der die Strebe maximal gestreckt ist.

Die Scharnierlaschen können zum Zwecke der Verriegelung Öffnungen enthalten, die in der Verriegelungsstellung miteinander fluchten, wobei zur Verriegelung ein in die Öffnungen einschiebbarer Bolzen vorgesehen ist. Der Bolzen ist mittels einer Feder in die vorgeschobene Stellung vorgespannt, damit selbsttätig das Einrasten erfolgt, wenn die gewünschte gestreckte Stellung erreicht ist.

Um den Bolzen zu entriegeln, ist ein Betätigungsglied vorgesehen, das im Bereich einer der beiden Scharnierlaschen gelagert ist und dazu dient, den Bolzen aus wenigstens einer der beiden Öffnungen zurückzudrücken.

Um die Knickfestigkeit der Scharnierlaschen am Übergang zu den Fortsätzen, auf denen die Strebenabschnitte stecken, zu verbessern, ist die Scharnierlasche mit einer Sicke versehen, die sich in den Fortsatz hinein erstreckt.

Damit bei jeweils gestreckter Strebe die Strebenabschnitte in gerader Linie zueinander verlaufen, ist der Fortsatz jeder Scharnierlasche geringfügig abgekröpft. Wenn die Abkröpfung an beiden Scharnierlaschen betragsmäßig gleich ist, genügt eine einzige Art von Scharnierlaschen, um das Scharnier aufzubauen. Hierdurch vereinfacht sich der fertigungstechnische Aufwand, weil nur ein Werkzeug zum Stanzbiegen der Scharnierlasche erforderlich ist.

Zwecks unlösbarer Verbindung der Scharnierlasche mit den Strebenabschnitten enthält die Scharnierlasche in ihrem Rand Ausnehmungen oder Kerben, die vorzugsweise sägezahnförmig gestaltet sind.

Um das Scharnier und die Verriegelungseinrichtung gegen Eindringen von Schmutz zu schützen, sowie die Federteile gegen Beschädigung, ist jeder Scharnierlasche eine schalenförmige Abdeckung zugeordnet.

Eine sehr hohe Festigkeit der Streben gegen Durchbiegen bei geringem Gewicht wird erreicht, wenn der Strebenabschnitt rohrförmig ist. Im einfachsten Falle ist jeder Strebenabschnitt ein zylindrisches Rohr, das in der Nähe des Scharniers im Querschnitt abgeflacht ist, wobei in dem abgeflachten Teil, der dadurch eine ovale Querschnittsgestalt bekommt der Fortsatz eingesteckt ist.

Die axiale Sicherung des jeweiligen Strebenabschnittes auf dem Fortsatz der Scharnierlasche geschieht, indem der Strebenabschnitt auf dem Fortsatz verstemmt wird, wobei Material des Strebenabschnitts in die randseitigen Ausnehmungen der jeweiligen Lasche gedrängt wird.

Die Strebenabschnitte bestehen zweckmäßigerweise aus einem energieverzehrend verformbaren Material, wodurch bei einem Auffahrunfall die Belastungsspitzen an dem Flächengebilde vermindert werden.

Das Flächengebilde kann aus einem Netz oder aus einer gelochten Folie bestehen.

Die Streben bzw. Strebenabschnitte sind an dem Flächengebilde unverdrehbar befestigt, um die Handhabung zu vereinfachen. Darüber hinaus sollten im Sinne einer einfachen Handhabung die Strebenabschnitte noch an dem Flächengebilde unverschieblich befestigt sein.

Ein Einklemmen des Flächengebildes beim Zusammenfalten und eine einfachere Herstellbarkeit wird erreicht, wenn das Flächengebilde im Bereich des jeweiligen Scharniers eine Aussparung enthält.

Der erfindungsgemäßen Trenneinrichtung ist eine Sicherungseinrichtung zugeordnet, die dazu dient die Trenneinrichtung in ihrer Verstaustellung zu sichern, damit sie als kompakte Einheit handhabbar ist, ohne dass die Gefahr besteht, dass es sich in die Trenneinrichtung auseinanderwickelt oder auffaltet.

Die Verstaueinrichtung ist vorteilhafter Weise von einer Tasche gebildet, die an der Trenneinrichtung unverlierbar befestigt ist. Die Tasche kann aus zwei flexiblen Taschenwänden bestehen, von denen jede sich längs eines Strebenabschnittes einer der beiden Streben erstreckt und von denen jede im Bereich des betreffenden Strebenabschnittes befestigt ist. Dadurch wird erreicht, dass sich eine vollständige Tasche ergibt, wenn die Trenneinrichtung nach dem Zusammenfalten der beiden Streben über eine der beiden gefalteten Streben aufgewickelt wird. Durch Verbinden der Taschenwände miteinander wird ein Freikommen des Wickels aus der Tasche verhindert.

Die beiden Taschenwände tragen zweckmäßigerweise an ihrer von der jeweiligen Strebe, an der sie befestigt sind, abliegenden Seite je einen Teil eines Reißverschlusses. In der Verstaustellung kommen diese beiden Kanten in eine benachbarte Lage, womit der Reißverschluss zu schließen ist.

Die Festigkeit der erfindungsgemäßen Trenneinrichtung lässt sich erhöhen, wenn sie zusätzlich zu den beiden an dem Rand des Flächengebildes vorgesehenen Streben eine dritte Strebe aufweist, die in derselben Weise ausgeführt ist, wie die beiden randseitigen Streben.

Im Übrigen sind Weiterbildungen der Erfindung Gegenstand von Unteransprüchen. In der Zeichnung sind Ausführungsbeispiele des Gegenstandes der Erfindung dargestellt.

Es zeigen:
- Fig. 1: die zwischen dem Dach eines Kraftfahrzeuges und der Rücksitzlehne aufgespannte Trenneinrichtung in einer perspektivischen Darstellung mit teilweise aufgebrochener Fahrzeugkarosserie;
- Fig. 2: das Mittenscharnier der Streben der Trenneinrichtung nach Fig. 1 in einem Schnitt parallel zur Scharnierachse;
- Fig. 3: das Mittenscharnier nach Fig. 2 in einer schematisierten Explosionsdarstellung;
- Fig. 4 und 5: die Scharnierlaschen des Scharniers in einer Draufsicht, bzw. in einem Schnitt längs der Linie IV-IV nach Fig. 4;
- Fig. 6: die Feder zum Vorspannen des Verriegelungsbolzens des Scharniers nach Fig. 2;
- Fig. 7: das scharnierseitige Ende eines Strebenabschnitts der Trenneinrichtung nach Fig. 1 in einer abgebrochenen perspektivischen Darstellung;
- Fig. 8: die montierte Anordnung aus der Strebe und der entsprechenden Scharnierlasche;
- Fig. 9: eines der energieverzehrenden Elemente der oberen Strebe der Trenneinrichtung nach Fig. 1 und
- Fig. 10 und 11: unterschiedliche Stellungen der Trenneinrichtung nach Fig. 1 bei der Handhabung

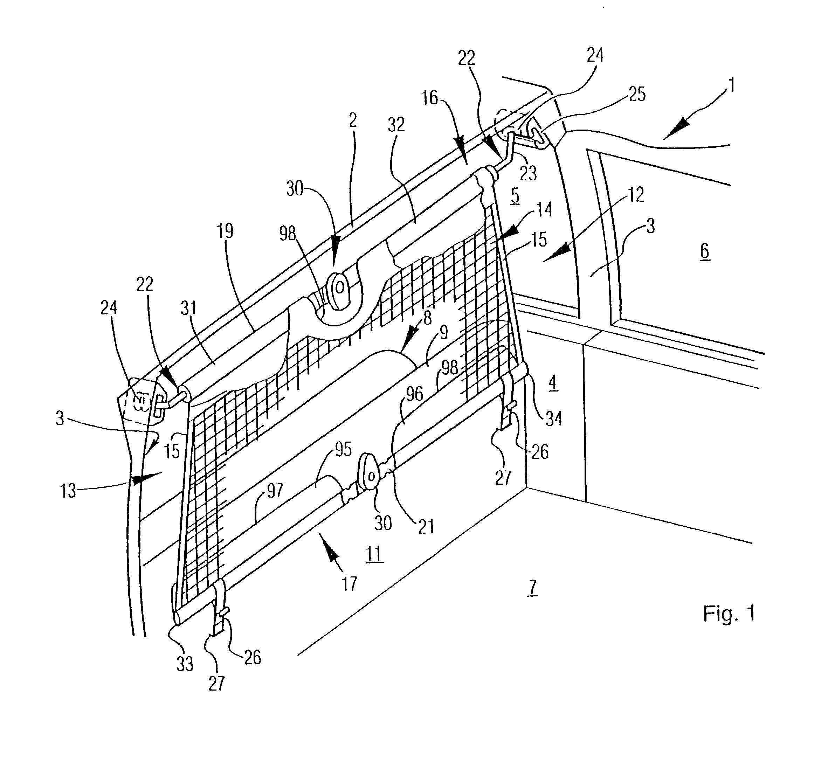

Fig. 1 zeigt in aufgebrochener Darstellung einen Heckbereich 1 eines Kombi-PKW. Der Heckbereich 1 ist perspektivisch etwa aus der Sicht des weggebrochenen, linken seitlichen Heckfensters dargestellt. Er weist ein Dach 2 auf, das seitlich von zwei C-Säulen 3 getragen wird. Vor der C-Säule 3 liegt unterhalb des Daches 2 und oberhalb einer Seitenwand 4 ein hinteres Seitenfenster 5, während hinter der C-Säule 3 ein weiteres hinteres Seitenfenster 6 angeordnet ist. Die Anordnung der Seitenfenster 5, 6 ist auf der linken Seite des Heckbereiches 1 spiegelbildlich zu denken.

Nach unten wird der Heckbereich 1 von einer im Wesentlichen ebenen Ladefläche 7 abgeschlossen.

Zwischen den beiden hinteren Seitenfenstern 5 befindet sich auf der Höhe der C-Säule eine Rücksitzbank 8, deren Rücksitzlehne 9 mit einer Rückseite 11 etwa zwischen den beiden C-Säulen 3 steht.

Zwischen der Unterkante des Daches 2 und der Oberkante der Rücksitzlehne 9 befindet sich eine Öffnung 12, über die ein vor der Rücksitzlehne 9 befindlicher Fahrgastraum mit dem dahinter befindlichen Laderaum des Heckbereiches 1 in Verbindung steht.

Um zu verhindern, dass bei einem Crash Gegenstände aus dem Heckbereich 1 in den Fahrgastraum geschleudert werden, wird die Öffnung 12 durch eine Trenneinrichtung 13 verschlossen.

Zu der Trenneinrichtung 13 gehört ein Flächengebilde in Gestalt eines trapezförmig zugeschnittenen Trenn-Netzes 14, das seitlich von Einfassbändern 15 eingefasst ist und dessen obere und dessen untere Kante jeweils von einer angenähten und angeschweißten schlauchförmigen Schlaufe 16, 17 gebildet ist. Durch die Schlaufe 16 führt eine Strebe 19, die mit der Schlaufe 16 zusätzlich bspw. mit Hilfe von nicht gezeigten Nieten verbunden ist, um zu verhindern, dass sich die Strebe 19 in der Schlaufe 16 drehen oder in Längsrichtung der Strebe 19 verschieben kann.

In ähnlicher Weise ist die Verbindung zwischen der unteren Strebe 21 und der unteren Schlaufe 17 ausgeführt, d.h. auch die Strebe 21 kann sich in der Schlaufe 17 weder drehen noch verschieben.

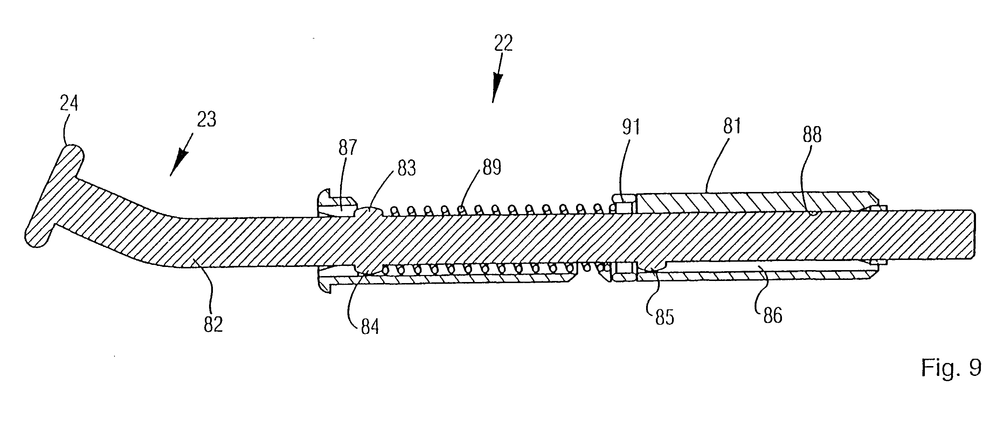

Die Strebe 19 ist rohrförmig ausgeführt und sie enthält in ihren nach außen zeigenden Enden energieverzehrende Elemente 22, deren Aufbau im Einzelnen in Fig. 9 gezeigt ist.

Aus dem energieverzehrenden Element 22 stehen Befestigungsglieder 23 vor, die endseitig pilzförmige Köpfe 24 tragen. Mit diesen pilzförmigen Köpfen 24 sind die Befestigungsglieder 23 in karosseriefesten T-Nuten 25 aufgenommen.

Die Unterkante mit der Strebe 21 wird mit Hilfe von zwei Zugbändern 26 und nicht weiter erkennbaren Haken an Ösen 27 befestigt, die an der Rückseite 11 der Rücklehne 9 angebracht sind. Die Zugbänder 26 sind begrenzt dehnbar.

Gemäß der Erfindung sind die beiden Streben 19 und 21 in ihrer wirksamen Länge verkürzbar. Zu diesem Zweck enthält sowohl die Strebe 19 als auch die Strebe 21 ein mittleres Scharnier 30, das bspw. die Strebe 19 in einen linken Strebenabschnitt 31 und einen rechten Strebenabschnitt 32 aufteilt. In ähnlicher Weise wird die Strebe 21 durch das Scharnier 30 in einen linken und einen rechten Strebenabschnitt 33 und 34 aufgeteilt.

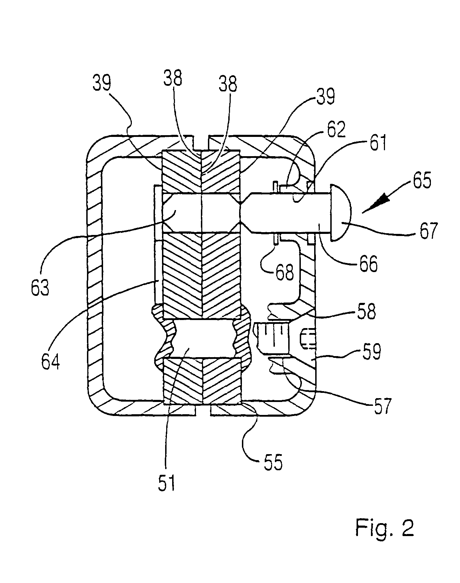

Der Aufbau des Scharniers 30 und die Verbindung mit den rohrförmigen Strebenabschnitten 31... 34 wird nachstehend anhand der Fig. 2 bis 8 erläutert.

Zu dem Scharnier 30 gehören zwei identische Scharnierlaschen 35a und 35b, die als Blechbiege- und -stanzteile ausgeführt sind sowie zwei schalenförmige Scharnierdeckel 36a und 36b, die nahezu identisch sind.

Die Scharnierlasche 35a setzt sich aus einem plattenförmigen Laschenabschnitt 37 mit zwei zueinander parallelen Flachseiten 38 und 39 und einem einstückig davon ausgehenden Fortsatz 41 zusammen. Die Dicke des Fortsatzes 41 ist gleich der Dicke des Laschenabschnittes 37, und auch dieser wird von einer im Wesentlichen planen Flachseite 42 und einer dazu parallelen Flachseite 43 begrenzt. Der Laschenabschnitt 37 hat in der Draufsicht im weitesten Sinne eine etwa dreieckförmige Gestalt mit stark verrundeten Ecken. Am Übergang von dem ebenen Laschenabschnitt 37 zu dem Fortsatz 41 ist die Scharnierlasche 35a mit einer Abkröpfung 44 versehen. Die Abkröpfung 44 hat eine solche Tiefe, dass die Mittelebene zwischen den Flachseiten 42 und 43 des Fortsatzes 41 mit der Flachseite 37 bündig ist.

Im Übrigen verläuft der Fortsatz 41 parallel zu einer Ebene die bspw. durch die Flachseite 37 definiert ist.

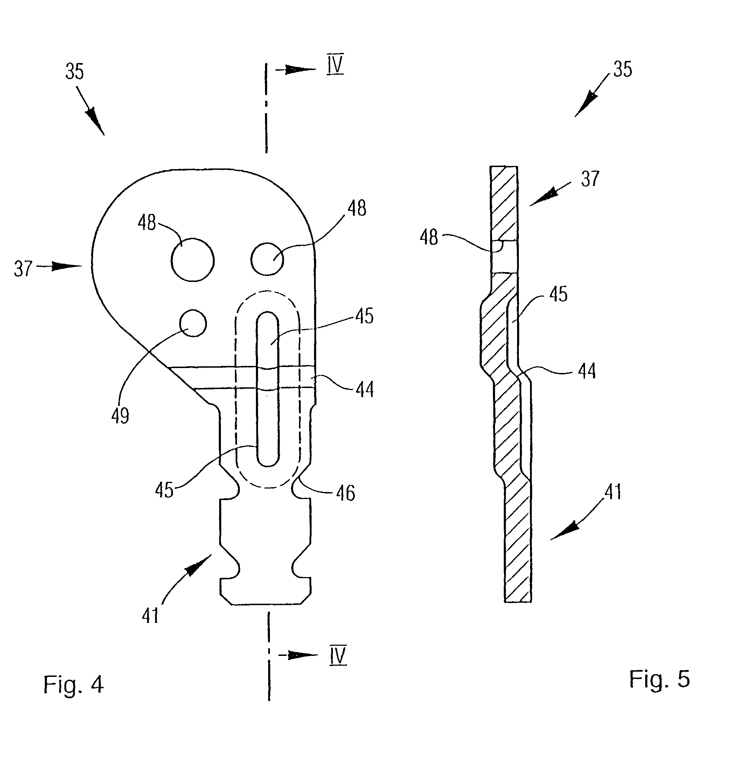

Um den Übergang zwischen dem Laschenabschnitt 37 zu dem Fortsatz 41 auszusteifen, ist eine längsovale Sicke 45 vorgesehen, die sich durch die Abkröpfung 44 hindurch erstreckt und von der sich ein Ende in dem Laschenabschnitt 37 und der andere in dem Fortsatz 41 befindet. Die Sicke 45 ist so gestaltet, dass sie sich aus den Flachseiten 39 und 43 erhebt, d.h. auf jener Seite konkav ist, an der der Fortsatz 41 zufolge der Abkröpfung 44 gegenüber der Flachseite 38 erhöht ist. Diese Ausgestaltung ist am besten aus Fig. 5 zu erkennen.

Zufolge der Abkröpfung können die beiden identischen Scharnierlaschen 35a und 35b mit ihren Flachseiten 38 zur Anlage gebracht werden, während die zugehörigen Fortsätze 41 sich dann in einer gemeinsamen Ebene befinden, d.h. sie weisen gegenüber der Trennfläche, an der die beiden Flachseiten 38 aufeinander liegen, jeweils denselben Versatz in entgegengesetzter Richtung auf.

Der Fortsatz 41 enthält in seinen gegenüberbefindlichen Rändern insgesamt vier etwa sägezahnförmig ausgestaltete Kerben oder Einschnitte 46, die in einer später noch beschriebenen Weise der Befestigung des betreffenden Strebenabschnitts 31...34 dient.

In dem Laschenabschnitt 37 sind zwei zylindrische Bohrungen 47 und 48, sowie eine Gewindebohrung 49 enthalten. Die Bohrung 47 ist, wie die Fig. erkennen lassen, gegenüber dem Fortsatz 41 deutlich versetzt. Sie bildet bei montiertem Scharnier 30, wie Fig. 2 zeigt, die Scharnierbohrung, durch die ein Scharnierbolzen 51 hindurch führt, der auf beiden Seiten mit einem Schließ- bzw. einem Nietkopf versehen ist.

Im montierten Zustand nach Fig. 2 liegen die beiden Scharnierlaschen 35a und 35b mit ihren Flachseiten 38 aufeinander und sind im Bereich der Scharnierbohrung 37 durch den Scharnierbolzen 51 drehbar aber ansonsten starr miteinander verbunden sind. Aufgrund des Scharnierbolzens 41 können die beiden Laschen 35a, 35b nur eine Drehbewegung in einer Ebene ausführen, die durch die Flachseite 38 definiert ist.

Die anderen beiden Flachseiten 39 zeigen bei vernietetem Scharnier 30 nach außen.

Die Scharnierdeckel 36a und 36b sind schalenförmig und bestehen aus einem im Wesentlichen ebenen Boden 52, an den eine endlos umlaufende Seitenwand 53 angeformt ist. Die Kontur der Seitenwand 53 folgt weitgehend der Außenkontur des Laschenabschnittes 37, wobei die Seitenwand 53 im Bereich der Abkröpfung 44 eine gerade Wand 54 bildet.

Die Seitenwand 53 ist an ihrer freien, von dem Boden 52 abliegenden Kante, mit einem Rücksprung 55 versehen mit dem sie,.wie Fig. 2 zeigt, die Außenseite des Laschenabschnittes 37 umgreift. Die gerade Seitenwand 54 folgt mit ihrer von dem Boden 52 abliegenden freien Kante der Kontur der Flachseite 43 bzw. 39 im Bereich der Abkröpfung 44. Im montierten Zustand ist damit der Laschenabschnitt 37 von dem Deckel 36 verschlossen, während der Fortsatz 41 unter der Wand 54 hervorsteht.

An dem Boden 52 ist ein zylindrischer Fortsatz 56 angeformt, dessen axiale Länge so bemessen ist, dass er auf der Flachseite 39 aufliegt, wenn der Rücksprung 55 ebenfalls an die Flachseite 39 anstößt. In dem Fortsatz 56 befindet sich eine Durchgangsbohrung 57, die auf der Außenseite des Deckels 36 in eine Kegelsenkung 58 übergeht. Durch die so erhaltene Kegelbohrung führt eine Senkschraube 59, die in die Gewindebohrung 49 eingedreht ist. Auf diese Weise wird der Deckel 36 an der betreffenden Lasche 35a bzw. 35b fixiert.

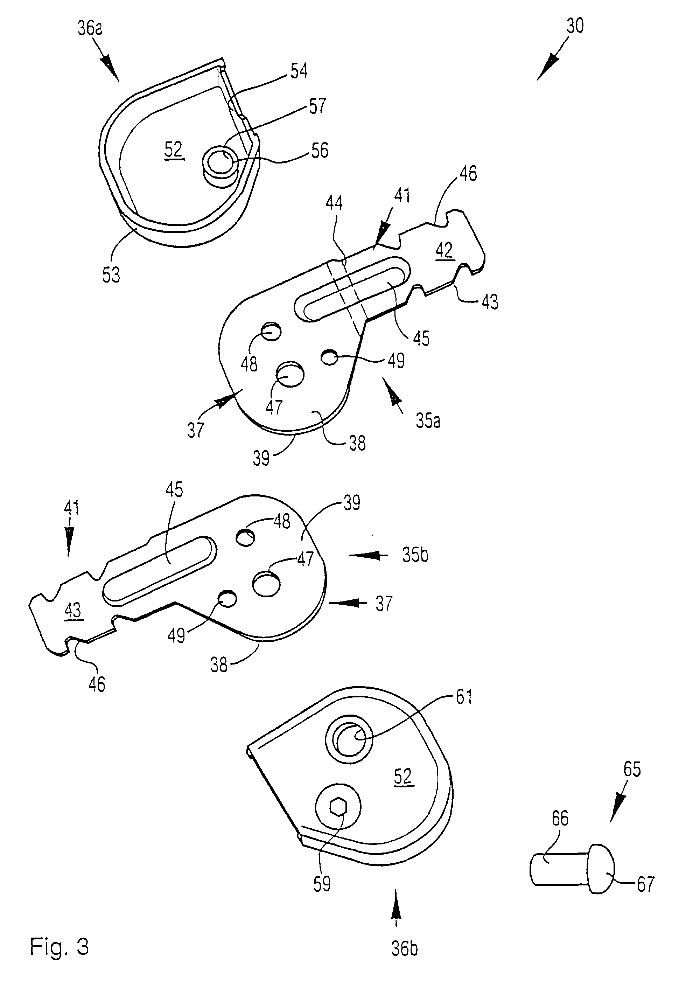

Der Deckel 36b enthält zusätzlich zu der Bohrung 57 eine weitere zylindrische Bohrung 61, die an der Innenseite des Deckels 52 von einem kurzen zylindrischen Kragen 62 umgeben ist. Die Bohrung 61 fluchtet bei montiertem Deckel 36b mit der zylindrischen Bohrung 48. Diese wiederum befindet sich, wie die Fig. 3 erkennen lässt, oberhalb der Scharnierbohrung 47 und zwar an einer solchen Stelle, dass die beiden Fortsätze 41 in Verlängerung zueinander verlaufen, wenn die Bohrungen 48, wie Fig. 2 erkennen lassen, miteinander zur Deckung gebracht sind.

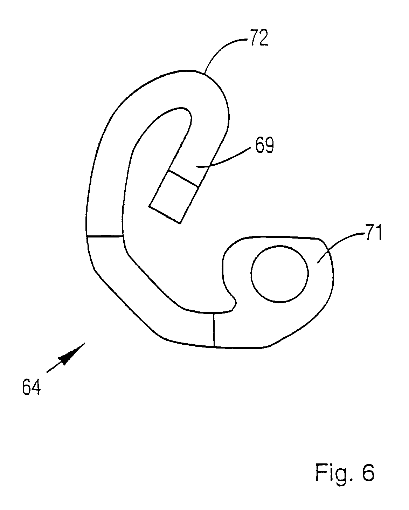

Die Bohrungen 48 in den beiden Scharnierlaschen 35a und 35b dienen der Aufnahme eines zylindrischen Verriegelungsbolzens 53, der in den Bohrungen 48 frei verschieblich ist. Mit Hilfe einer Blattfeder 64, die im Einzelnen in Fig. 6 gezeigt ist, wird der Verriegelungsbolzen 63 in Richtung auf die Bohrung 61 zu vorgespannt. Die Länge des Verriegelungsbolzens 63 ist etwa gleich der doppelten Stärke des Laschenabschnittes 37.

Um den Scharnierbolzen 63 in die entriegelte Lage zu bringen, ist ein Entriegelungsknopf 65 vorhanden, der sich aus einem zylindrischen Schaft 66 und einem Betätigungskopf 67 zusammensetzt. Mit dem zylindrischen Schaft 66 ist der Entriegelungsknopf in der zylindrischen Bohrung 41 längsverschieblich geführt und wird durch eine Krallenfederscheibe 68, die auf dem Schaft 66 sitzt, gegen Herausfallen gesichert.

Die Blattfeder 64 liegt auf der nach außen zeigenden Seite 39 auf. Sie ist in Fig. 6 in der Draufsicht gezeigt und weist einen gekrümmten Verlauf mit einem Federarm 69 auf, der gegen den Verriegelungsbolzen 63 drückt. Am gegenüberliegenden Ende geht die Blattfeder 64 in ein Befestigungsauge 71 über, das bei der Montage auf der Gewindebohrung 49 zu liegen kommt und zwischen dem Laschenabschnitt 37 und dem Fortsatz 56 des betreffenden Deckels 36 eingeklemmt wird.

Die Außenkontur der Blattfeder 64 folgt im Wesentlichen der Innenkontur des Deckels 36, so dass sich die Blattfeder 64 auf der Flachseite 39 nicht verdrehen kann. Ihr stark geknickter Bereich 72 stößt dazu an der Innenseite der geraden Seitenwand 54 an. Auf diese Weise wird sichergestellt, dass das freie Ende 69 immer auf den Verriegelungsbolzen 63 einwirken kann.

Die Montage und der Aufbau des Scharniers 30 ist wie folgt:
Zwei identische Scharnierlaschen 35 werden so aufeinander gelegt, dass sich ihre Flachseiten 38 berühren. Die Flachseiten 38 sind diejenigen Seiten, die gegenüber der Abkröpfung 44 vertieft sind. Durch die miteinander fluchtenden Scharnierbohrungen 47 wird der Scharnierbolzen 51 hindurch gesteckt und auf beiden Seiten, wie gezeigt, vernietet. Danach sind die beiden Scharnierlaschen 35a und 35b spielfrei miteinander verbunden und können bezüglich einer Drehachse, die mit der Achse der Scharnierbohrungen 47 zusammenfällt, gegeneinander verschwenkt werden.

Sodann wird auf jene Scharnierlasche 35, die in Fig. 2 auf der linken Seite dargestellt ist, die Blattfeder 64 aufgelegt und zwar in einer Stellung, in der das Auge 71 mit der Gewindebohrung 49 deckungsgleich ist, während der freie Arm 69 die Bohrung 48 überdeckt. Anschließend wird der betreffende Deckel 36 mit Hilfe einer entsprechenden Schraube 59 aufgeschraubt, wobei gleichzeitig die Blattfeder 64 lagerichtig auf der betreffenden Scharnierlasche 35 fixiert wird. Anschließend werden die beiden Scharnierlaschen 35a und 35b in eine Stellung gebracht, in der die Bohrungen 48 miteinander fluchten, damit der Verriegelungsbolzen 63 in diese eingesteckt werden kann. Abschließend wird der andere Deckel 36b in ähnlicher Weise auf der noch freiliegenden Scharnierlasche 35b befestigt. Zuvor wurde noch der Entriegelungsknopf 65 eingesteckt und mit der Krallenfederscheibe 68 gesichert.

Durch Eindrücken des Entriegelungsknopfes 65 wird der Verriegelungsbolzen 63 aus der Bohrung 48 der Scharnierlasche 35b weggedrückt, wobei gleichzeitig der Schaft 66 in die Bohrung 48 vordringt. Sobald der Entriegelungsknopf 65 vollständig eingedrückt ist, bis sein Betätigungsknopf 67 auf dem Anschlag auf dem Deckel 36 anliegt, ist der Verriegelungsbolzen 63 gegen die Wirkung der Blattfeder 64 weit genug zurückgedrückt, bis er nicht mehr in die Bohrung 48 der Scharnierlasche 35b hineinragt. Die beiden Scharnierlaschen 35a und 35b können nun gegeneinander gedreht werden, wobei nach einer kurzen Verschwenkung der Entriegelungsknopf 65 losgelassen werden kann, ohne dass es zu einer erneuten Verriegelung kommt. Nach einem kurzen Schwenkweg steht dem Verriegelungsbolzen 63, der sich nun nur noch in der Bohrung 48 der Scharnierlasche 35 befindet, die Flachseite 38 der anderen Scharnierlasche 35 gegenüber. Damit ist jederzeit eine Verschwenkung der beiden Scharnierlaschen 35a und 35b gegeneinander möglich.

Sobald die Scharnierlaschen wieder in eine Stellung zurückgeschwenkt werden, in der die beiden Fortsätze 41 zueinander gestreckt verlaufen, kommen die beiden Verriegelungsbohrungen 48 wieder zueinander zur Deckung und die Blattfeder 64 kann den Verriegelungsbolzen 63 in die Lage nach Fig. 2 zurückdrücken um das Scharnier 30 in der gestreckten Stellung zu blockieren.

An einem Herausfallen in der entgegengesetzten Richtung wird der Verriegelungsbolzen 63 durch den Entriegelungsknopf 65 gehindert, indem sich dessen Krallenfederscheibe 68 an der freien Stirnseite des Kragens 62 anlegt.

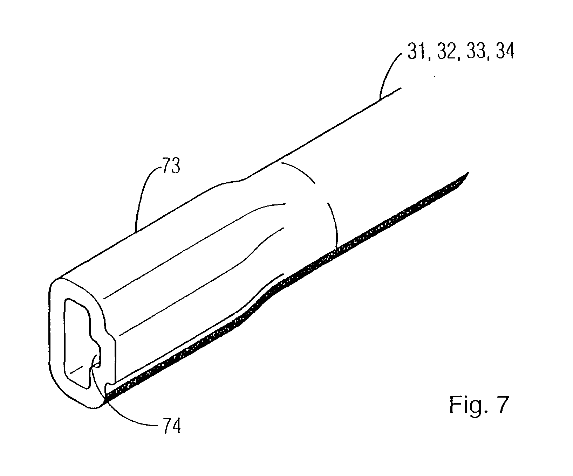

Jeder der Strebenabschnitte 31...34 besteht aus einem entsprechend langen Stahlrohrabschnitt mit rundem Querschnitt. An jenem Ende, an dem später die Verbindung zwischen dem Scharnier 30 und dem Strebenabschnitt 31...34 hergestellt werden soll, wird das zunächst zylindrische Rohr über die Länge eines Bereiches 73, wie aus Fig. 7 ersichtlich ist, umgeformt, damit ein längsovaler Querschnitt entsteht mit einer Ausbuchtung 74 zur Aufnahme der Sicke 45. Der Querschnitt des Strebenabschnittes 31...34 entspricht somit im Wesentlichen dem Querschnitt des betreffenden Fortsatzes 41 in einer Schnittebene rechtwinklig zu seiner Längserstreckung, und zwar über eine Länge, die etwas größer ist als die Länge des Fortsatzes 41.

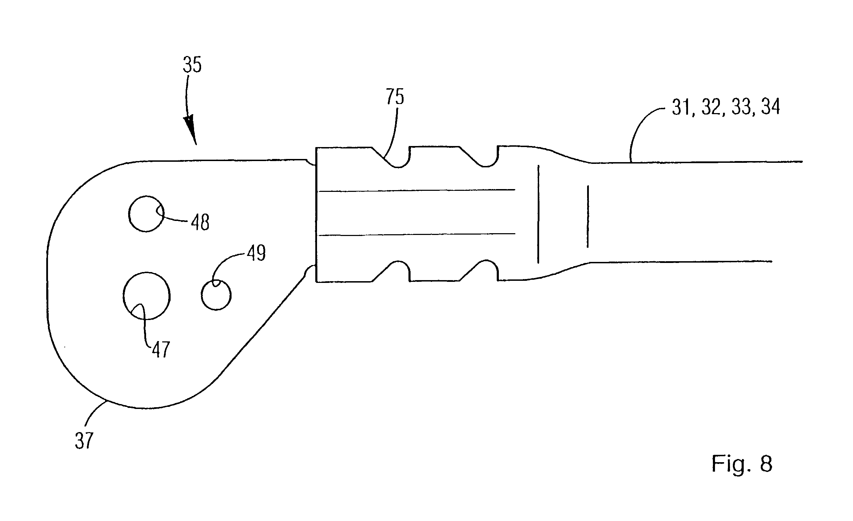

Die Verbindung mit dem Scharnier 30 geschieht, wie dies Fig. 8 erkennen lässt, indem die betreffende Strebe 31...34 mit ihrem Ende 73 voraus auf den entsprechenden Fortsatz 41 der Scharnierlasche 35 aufgesteckt wird. Sodann werden in die Strebe 31...34 Kerben 75 eingedrückt, womit das Wandmaterial der Strebe 31...34 die sägezahnförmigen Kerben 46 eingeprägt wird. Hierdurch entsteht eine spielfreie und zugfeste Verbindung zwischen der Scharnierleiste 35 und der betreffenden Strebe 31...34. Die Verbindung mit den Strebenabschnitten 31...34 kann vor oder nach der Montage des Scharniers 30 erfolgen.

Der Vollständigkeit halber seien noch kurz die energieverzehrenden Elemente 22 erläutert, deren Funktionsweise im Einzelnen in der DE-A 43 36 380 beschrieben ist.

Zu dem energieverzehrenden Element 22 gehört eine rohrförmige Kunststoffhülse 81, in der längsverschieblich ein zylindrischer Schaft 82 des Verankerungselementes 23 steckt. An den Schaft 82 sind mehrere nach außen wegstehende Laschen 83, 84 und 85 angequetscht, die in entsprechenden Längsnuten 86 und 87 laufen, die in der Seitenwand einer zylindrischen Bohrung 88 der Hülse 81 ausgebildet sind. Auf diese Weise ist der Schaft 32 in der Hülse 81 unverdrehbar. Eine Schraubendruckfeder 89, die sich in der Bohrung 88 befindet, stützt sich einerseits an den beiden miteinander fluchtenden Laschen 83 und 84 ab und andererseits an einem Ring 91, der aus einem festen Material besteht und mit Hilfe von Sicken in den beiden Strebenabschnitten 31 und 32 festgelegt ist.

Durch die Druckfeder 89 wird das Verankerungsglied 23 nach außen in die vorgeschobene Stellung gedrückt, in der die Lasche 85 an der Rückseite des Rings 91 anliegt.

Im Bereich der unteren Schlaufe 17 sind an dem Trennnetz 14 noch zwei Folienzuschnitte 95 und 96 angenäht, deren freie Ränder 97 bzw. 98 jeweils mit einem Teil eines Reißverschlusses versehen sind. Die beiden Zuschnitte 95 und 96 sind Seitenwände einer Tasche, die dem Verstauen der nicht gebrauchten Trenneinrichtung dient.

Zur Erläuterung der Handhabung der erfindungsgemäßen Trenneinrichtung 13 sei angenommen, dass sie in dem Fahrzeug installiert ist, wie dies Fig. 1 zeigt. Die beiden Scharniere 30 stehen in jener Stellung, in der die Fortsätze 41 und damit die Strebenabschnitte 31...34 sich jeweils in der Verlängerung des betreffend anderen Strebenabschnitts 41...34 befinden, wie dies die Figur erkennen lässt. Wie es sich aus der obigen Beschreibung des Scharniers 30 ergibt, ist in dieser Schwenklage der Verriegelungsbolzen 63 eingerastet und sperrt das Scharnier 30 gegen Knicken.

In der Gebrauchsstellung ist die Achse des Scharnierbolzens 51 sowohl des oberen Scharniers 30 als auch des unteren Scharniers 30 parallel zu der Fahrzeuglängsachse ausgerichtet.

Wenn in der Gebrauchslage wegen eines Crashes ein Gegenstand aus dem Laderaum gegen das Trenn-Netz 14 geschleudert wird, wird er von dem Trenn-Netz 14 zurückgehalten. Dabei werden die obere und die untere Strebe 19, 21 auf Knick beansprucht, wobei die maximale Knickkraft im Bereich der Gelenke 30 auftritt. Da dort die beiden Scharnierlaschen 35 über die Laschenabschnitte 37 flächig aufeinander liegen, ist das Scharnier 30 in der Lage verhältnismäßig große Knickkräfte auszuhalten. Darüber hinaus ist der Übergang zwischen dem Laschenabschnitt 37 und dem Fortsatz 41 durch die Sicke 45 verstärkt, womit sich insgesamt auch in diesem Bereich eine Festigkeit ergibt, die der Festigkeit eines durchgehenden Stahlrohrs entspricht, das die Abmessungen der Strebenabschnitte 31...34 aufweist.

Wenn die Trenneinrichtung 13 nicht benötigt wird, werden zur Entnahme zunächst die unteren Zugbänder 26 mit ihren Haken aus den Ösen 27 ausgehängt. Sodann wird die obere Strebe mit ihren Verankerungsgliedern 23 aus den T-Nuten 25 herausgezogen. Die Trenneinrichtung 13 kann nunmehr vollständig aus dem Fahrzeug entnommen werden.

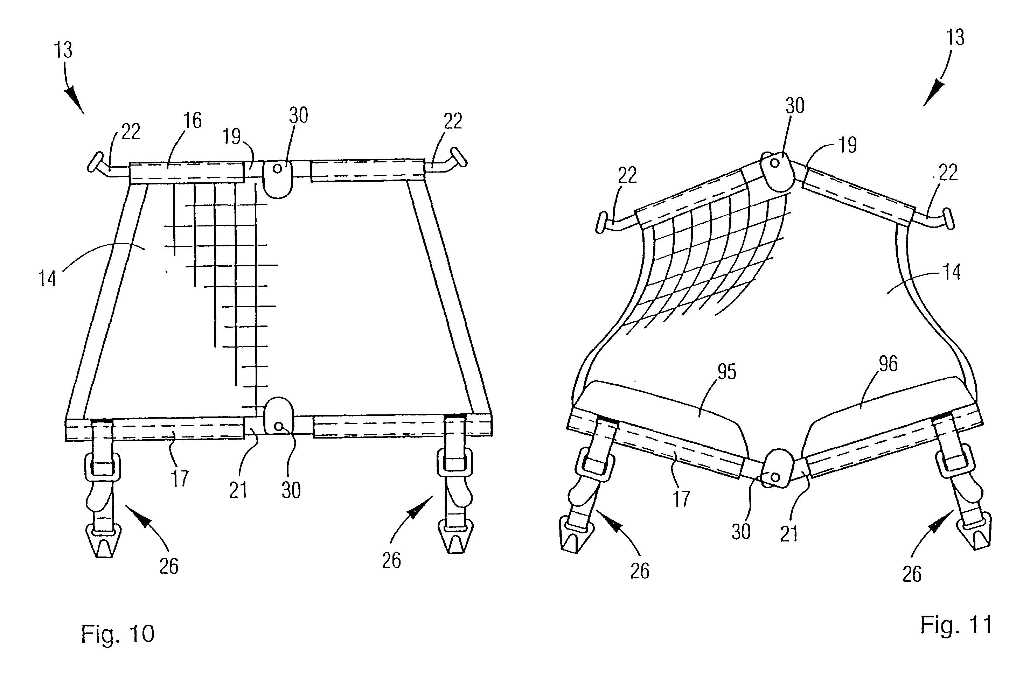

Nach der Entnahme aus dem Fahrzeug ergibt sich ein Bild gemäß Fig. 10. Der Benutzer kann nun bspw. zunächst das Scharnier 30 der unteren Strebe 21 entriegeln, indem der Entriegelungsknopf 65 eingedrückt wird. Dadurch wird das Scharnier 30 freigegeben und kann, wie oben ausführlich erläutert ist, eingefaltet werden. Den Beginn der Einfaltung zeigt Fig. 11.

Sodann wird dieser Vorgang mit dem Entriegelungsknopf 65 des Scharniers 30 an der oberen Strebe 19 wiederholt. Allerdings wird die obere Strebe 19 vollständig zusammengefaltet, soweit bis deren beide Strebenabschnitte 31 und 32 im Bereich ihrer von dem Scharnier 30 abliegenden Enden bspw. bei den pilzförmigen Köpfen 24 zusammenstoßen. Je nach den Abmessungen des Trenn-Netzes 14 folgen die unteren beiden Strebenabschnitte 33 und 34 dieser Faltbewegung.

Da die Achse des Scharniers 30 auf der aufgespannten Fläche des Trennnetzes 14 senkrecht steht und die Strebe 19 im Übrigen drehfest mit dem Netz 14 verbunden ist, wird zum vollständigen Zusammenlegen die Strebe um etwa 90° gedreht, so weit bis die Achse des Scharniers 30 bei der Handhabung parallel zu dem lose herunterhängenden Trenn-Netz 14 liegt. In dieser Stellung wird das Zusammenfalten der Strebe 19 durch das Trenn-Netz 14 nicht behindert.

Im zusammengeklappten Zustand haben die beiden Strebenabschnitte 31 und 32 in der unmittelbaren Nähe des Scharniers einen Abstand, der größer ist als es dem Durchmesser auch eines kräftigen Fingers entspricht, damit nicht die Gefahr der Quetschung entsteht. Dieser Abstand wird erreicht, weil die Scharnierbohrung 47 gegenüber den Fortsätzen 41 seitlich versetzt ist.

Falls noch nicht geschehen, wird sodann auch die untere Strebe 21 in ähnlicher Weise vollständig zusammengefaltet. Sodann wird von der oberen zusammengefalteten Strebe 19 her das Trenn-Netz 14 auf die zusammengeklappte Strebe 19 aufgewickelt, bis der entstandene Wickel an der zusammengefalteten Strebe 21 ankommt.

Aufgrund des Einfaltens der unteren Strebe 21 kommen die beiden Zuschnitte 95 und 96 in eine Lage, in der sie im Wesentlichen zueinander parallel verlaufen, und zwar auf der Außenseite des erhaltenen Wickels aus dem Trenn-Netz 14 und zu beiden Seiten des erhaltenen Wickels. Nunmehr kann der Reißverschluss, der an der freien Kante 96 bzw. 97 befestigt ist, geschlossen werden, womit der Wickel sicher in der so entstandenen Tasche aufbewahrt ist. Ein Auseinanderklappen wird durch die mit dem Reißverschluss verbundenen Zuschnitte 95 und 96 verhindert, die die Seitenwände der Tasche bilden. Die erhaltene Tasche ist keine vollständige Tasche, denn ihr fehlt der Boden. Dennoch ist sie in der Lage den Wickel weitgehend gegen Aufklappen zu sichern.

Die effektive Länge der Streben 19 und 21 ist durch das Falten auf die Hälfte reduziert worden, womit der entstandene Wickel eine Länge hat, die deutlich kürzer ist als es der Breite des aufgespannten Sicherheitsnetzes 14 entspricht. Das zusammengefaltet und aufgewickelte Trenn-Netz 14 lässt sich nunmehr ohne Weiteres innerhalb des Kraftfahrzeugs unterbringen.

Um eine Beschädigung des Trenn-Netzes 14 im Bereich der Scharniere 30 zu verhindern, kann das Trenn-Netz 14, wie in Fig. 1 gezeigt, in der Umgebung der Scharniere 30 mit einer Aussparung 98 versehen werden.

Abweichend von der dargestellten Form besteht auch die Möglichkeit zusätzlich zu den beiden an den Endschlaufen 16 und 17 vorgesehenen Streben 19 und 21 eine dritte Strebe zu verwenden, die etwa auf der Mitte verläuft und im Übrigen genauso gestaltet ist wie die Streben 19 und 21. Diese zusätzliche Strebe kann mit Anschlägen im Kraftfahrzeug zusammenwirken, um zusätzlich zur Festigkeit der Trenneinrichtung 13 beizutragen.

Zu einer Trenneinrichtung gehört ein Trenn-Netz oder Trenngitter aus einem flexiblen Material. An zwei zueinander parallel verlaufenden Kanten des Trenn-Netzes ist jeweils eine Versteifungsstrebe vorgesehen. Eine der beiden Versteifungsstreben dient der Verankerung des Trenn-Netzes unterhalb des Fahrzeugsdaches, während die andere Versteifungsstrebe im Abstand zum Dachhimmel, bspw. an der Rücklehne oder am Boden des Laderaums verankert wird. Die beiden Versteifungsstreben enthalten jeweils ein Scharnier. Auf diese Weise kann die Trenneinrichtung der Breite nach zusammengefaltet und anschließend aufgerollt werden. Eine Verstaueinrichtung in Gestalt einer an der Trenneinrichtung vorgesehenen Tasche dient der Sicherung des gefalteten Trenn-Netzes in der verstauten Stellung.

## Patentansprüche

1. Herausnehmbare Trenneinrichtung (13), die dazu vorgesehen ist, bei einem Kraftfahrzeug einen Laderaum von einem Fahrgastraum abzutrennen,
mit einer oberen Strebe (19), die in dem Kraftfahrzeug lösbar zu verankern ist und deren wirksame Länge um mehr als wenigstens 30% ihrer maximalen Länge verkürzbar ist,
mit einer unteren Strebe (21), die in dem Kraftfahrzeug lösbar zu verankern ist und deren wirksame Länge um mehr als wenigstens 30% ihrer maximalen Länge verkürzbar ist, und
mit einem flexiblen im wesentlichen undehnbaren Flächengebilde (14), das an der oberen und der unteren Strebe (19,21) befestigt ist.

2. Trenneinrichtung nach Anspruch 1, **dadurch gekennzeichnet, dass** die untere und die obere Strebe (19,21) zur Verkürzung ihrer effektiven Länge wenigsten einmal faltbar sind.

3. Trenneinrichtung nach Anspruch 1, **dadurch gekennzeichnet, dass** die untere und die obere Strebe (19,21) zur Verkürzung ihrer effektiven Länge je wenigstens ein eine Scharnierachse (51) aufweisendes Scharnier (30) enthalten, das die jeweilige Strebe (19,21) in Strebenabschnitte (31. ..34) aufteilt.

4. Trenneinrichtung nach Anspruch 3, **dadurch gekennzeichnet, dass** bei einem Scharnier (30) je Strebe (19,21) die beiden Strebenabschnitte (31...34) jeder Strebe (19,21) gleich lang sind.

5. Trenneinrichtung nach Anspruch 3, **dadurch gekennzeichnet, dass** die Scharniere (30) aufeinander ausgerichtet sind, in der Weise, dass bei aufgespannter Trenneinrichtung (13) die beiden Scharniere (30) auf einer Geraden liegen, die auf den beiden zueinander parallelen Streben (19,21) senkrecht steht.

6. Trenneinrichtung nach Anspruch 3, **dadurch gekennzeichnet, dass** die Scharnierachsen (51) bei aufgespannter Trenneinrichtung (13) vorzugsweise horizontal ausgerichtet sind.

7. Trenneinrichtung nach Anspruch 3, **dadurch gekennzeichnet, dass** die dem jeweiligen Scharnier (30) benachbarten Strebenabschnitte (31...34) bezüglich der Scharnierachse (51) derart radial versetzt angeordnet sind, dass bei gefalteter Strebe (19,21) deren Strebeabschnitte (31...34) zumindest in eine zueinander parallele Lage zu bringen sind.

8. Trenneinrichtung nach Anspruch 3, **dadurch gekennzeichnet, dass** die dem jeweiligen Scharnier (30) benachbarten Strebenabschnitte (31...34) bezüglich der Scharnierachse (51) derart radial versetzt angeordnet sind, dass bei gefalteter Strebe (19,2) deren Strebenabschnitte (31...34) neben dem Scharnier (30) einen Abstand voneinander haben, wenn die von dem Scharnier (30) abliegenden Enden der Strebenabschnitte (31...34) aneinanderstoßen.

9. Trenneinrichtung nach Anspruch 8, **dadurch gekennzeichnet, dass** der Abstand in der Nähe des Scharniers (30) wenigstens 1,5 cm beträgt.

10. Trenneinrichtung nach Anspruch 3, **dadurch gekennzeichnet, dass** das Scharnier (30) ein einfaches Scharnier mit lediglich einer Scharnierachse (51) ist.

11. Trenneinrichtung nach Anspruch 3, **dadurch gekennzeichnet, dass** das Scharnier (30) zwei Scharnierlaschen (25) aufweist, die durch einen Scharnierbolzen (51) miteinander unlösbar verbunden sind.

12. Trenneinrichtung nach Anspruch 11, **dadurch gekennzeichnet, dass** jede Scharnierlasche (35) einen Fortsatz (41) trägt, an dem der jeweilige Strebenabschnitt (31...34) befestigt ist.

13. Trenneinrichtung nach Anspruch 11, **dadurch gekennzeichnet, dass** in einer Stellung des Scharniers (30), in der die Fortsätze (41) der Scharnierlaschen (35) auf einer Geraden liegen, die Scharnierachse (51) gegenüber den Fortsätzen (41) seitlich versetzt ist, und zwar gemessen in einer Ebene, auf der die Scharnierachse (51) senkrecht steht.

14. Trenneinrichtung nach Anspruch 3, **dadurch gekennzeichnet, dass** das Scharnier (30) in wenigstens einer Stellung verriegelbar ist.

15. Trenneinrichtung nach Anspruch 3, **dadurch gekennzeichnet, dass** das Scharnier (30) lösbar formschlüssig verriegelbar ist.

16. Trenneinrichtung nach Anspruch 15, **dadurch gekennzeichnet, dass** die Stellung der gestreckten Strebe (19, 21) entspricht.

17. Trenneinrichtung nach den Ansprüchen 11 und 15, **dadurch gekennzeichnet, dass** die Scharnierlaschen (35) Öffnungen (48) enthalten, die in der Verriegelungsstellung miteinander fluchten, und dass zur Verriegelung ein in die Öffnungen (48) einschiebbarer Bolzen (63) vorgesehen ist.

18. Trenneinrichtung nach Anspruch 17, **dadurch gekennzeichnet, dass** der Bolzen (63) mittels einer Feder (64) in die vorgeschobene Stellung vorgespannt ist.

19. Trenneinrichtung nach Anspruch 17, **dadurch gekennzeichnet, dass** dem Bolzen (63) ein Betätigungsglied (65) zugeordnet ist, das im Bereich einer der Scharnierlaschen (35) gelagert ist.

20. Trenneinrichtung nach Anspruch 11, **dadurch gekennzeichnet, dass** die Scharnierlasche (35) zur Versteifung mit einer in den Fortsatz (41) sich erstreckenden Sicke (45) versehen ist.

21. Trenneinrichtung nach Anspruch 11, **dadurch gekennzeichnet, dass** der Fortsatz (41) jeder Scharnierlasche (35) abgekröpft ist, derart dass die Fortsätze (41) in einer gemeinsamen Ebene verlaufen, auf der die Scharnierachse (51) senkrecht steht.

22. Trenneinrichtung nach Anspruch 11, **dadurch gekennzeichnet, dass** jede Scharnierlasche (35) in ihrem Rand Ausnehmungen (46) enthält.

23. Trenneinrichtung nach Anspruch 11, **dadurch gekennzeichnet, dass** jeder Scharnierlasche (35) eine schalenförmige Abdeckung (36) zugeordnet ist.

24. Trenneinrichtung nach Anspruch 3, **dadurch gekennzeichnet, dass** der Strebenabschnitt (31...34) rohrförmig ist.

25. Trenneinrichtung nach Anspruch 3, **dadurch gekennzeichnet, dass** der Strebenabschnitt (31...34) von einem zylindrischen Rohr gebildet ist und dass das Rohr zur Aufnahme des Fortsatzes (41) der jeweiligen Scharnierlasche (35) im Querschnitt abgeflacht ist.

26. Trenneinrichtung nach Anspruch 3, **dadurch gekennzeichnet, dass** der Strebenabschnitt (31...34) mit einem Ende auf den Fortsatz (41) aufgesteckt und mit dem Fortsatz (41) verstemmt ist, indem Material des Strebenabschnitts (31...34) in die randseitigen Ausnehmungen (46) des jeweiligen Fortsatzes (41) verdrängt ist.

27. Trenneinrichtung nach Anspruch 3, **dadurch gekennzeichnet, dass** die Strebenabschnitte (31...34) aus einem energieverzehrend verformbaren Material bestehen.

28. Trenneinrichtung nach Anspruch 1, **dadurch gekennzeichnet, dass** das Flächengebilde (14) von einem Netz gebildet ist.

29. Trenneinrichtung nach Anspruch 1, **dadurch gekennzeichnet, dass** das Flächengebilde (14) aus einer gelochten Folie besteht.

30. Trenneinrichtung nach Anspruch 1, **dadurch gekennzeichnet, dass** die Streben (19,21) an dem Flächengebilde (14) unverdrehbar befestigt sind.

31. Trenneinrichtung nach Anspruch 1, **dadurch gekennzeichnet, dass** die Streben (19,21) an dem Flächengebilde (14) unverschieblich befestigt sind.

32. Trenneinrichtung nach Anspruch 3, **dadurch gekennzeichnet, dass** das Flächengebilde (14) im Bereich des jeweiligen Scharniers (30) eine Aussparung (98) enthält.

33. Trenneinrichtung nach Anspruch 1, **dadurch gekennzeichnet, dass** sie eine Sicherungseinrichtung (95,96) aufweist, um die Trenneinrichtung (13) in ihrer Verstaustellung zu sichern.

34. Trenneinrichtung nach Anspruch 33, **dadurch gekennzeichnet, dass** die Verstaueinrichtung (95,96) von einer unverlierbar befestigten Tasche gebildet ist, in der die Trenneinrichtung (13) zu verstauen ist.

35. Trenneinrichtung nach Anspruch 34, **dadurch gekennzeichnet, dass** zu der Tasche zwei flexible Taschenwände (95,96) gehören, von denen jede sich längs eines Strebenabschnitts (33,34) einer der beiden Streben (21) erstreckt und von denen jede im Bereich des betreffenden Strebenabschnitts (33,34) befestigt ist.

36. Trenneinrichtung nach Anspruch 35, **dadurch gekennzeichnet, dass** jede Taschenwand (95,96) einen Teil eines Reißverschluss trägt.

37. Trenneinrichtung nach Anspruch 1, **dadurch gekennzeichnet, dass** sie eine dritte Strebe aufweist, die mit dem Flächengebilde (14) verbunden ist und die in derselben Weise ausgeführt ist wie die übrigen Streben (19,21).

38. Trenneinrichtung nach Anspruch 1, **dadurch gekennzeichnet, dass** die obere und/oder die untere Strebe (19,21) endseitig mit Verankerungsgliedern (22) versehen ist.

39. Trenneinrichtung nach Anspruch 38, **dadurch gekennzeichnet, dass** wenigstens eines der Verankerungsglieder (22) bezüglich der Strebe (19) längsverschieblich geführt ist.

40. Trenneinrichtung nach Anspruch 1, **dadurch gekennzeichnet, dass** die untere Strebe (21) im Abstand von ihren Enden mit Verankerungsgliedern (26) versehen ist.

41. Trenneinrichtung nach Anspruch 40, **dadurch gekennzeichnet, dass** die Verankerungsglieder (26) band- oder seilförmig sind.

## Claims

1. Removable separating device (13), which is provided for the purpose of separating a luggage area from a passenger compartment in a motor vehicle,
with an upper strut (19), which is to be detachably anchored in the motor vehicle and the effective length of which may be shortened by more than at least 30% of its maximum length,
with a lower strut (21), which is to be detachably anchored in the motor vehicle and the effective length of which may be shortened by more than at least 30% of its maximum length, and
with a flexible, essentially non-stretch fabric (14), which is fastened to the upper and the lower strut (19, 21).

2. Separating device according to Claim 1, **characterised in that** the lower and the upper strut (19, 21) are capable of being folded at least once to shorten their effective length.

3. Separating device according to Claim 1, **characterised in that** to shorten their effective length, the lower and the upper strut (19, 21) each contain at least one hinge (30) with a hinge axis (51), which divides the respective strut (19, 21) into strut sections (31...34).

4. Separating device according to Claim 3, **characterised in that** in the case of one hinge (30) per strut (19, 21), the two strut sections (31...34) of each strut (19, 21) are of equal length.

5. Separating device according to Claim 3, **characterised in that** the hinges (30) are aligned to one another such that when the separating device (13) is opened out, the two hinges (30) lie on a straight line, which stands perpendicular on the two parallel struts (19, 21).

6. Separating device according to Claim 3, **characterised in that** when the separating device (13) is opened out, the hinge axes (51) are preferably aligned horizontally.

7. Separating device according to Claim 3, **characterised in that** the strut sections (31...34) adjacent to the respective hinge (30) are displaced radially with respect to the hinge axis (51) in such a way that when a strut (19, 21) is folded, its strut sections (31...34) are at least to be brought into a position parallel to one another.

8. Separating device according to Claim 3, **characterised in that** the strut sections (31...34) adjacent to the respective hinge (30) are displaced radially with respect to the hinge axis (51) in such a way that when a strut (19, 21) is folded, its strut sections (31...34) next to the hinge (30) are spaced from one another when the ends of the strut sections (31...34) remote from the hinge (30) abut against one another.

9. Separating device according to Claim 8, **characterised in that** the spacing in the vicinity of the hinge (30) amounts to at least 1.5 cm.

10. Separating device according to Claim 3, **characterised in that** the hinge (30) is a simple hinge with only one hinge axis (51).

11. Separating device according to Claim 3, **characterised in that** the hinge (30) has two hinge plates (35), which are undetachably connected to one another by a hinge pin (51).

12. Separating device according to Claim 11, **characterised in that** each hinge plate (35) bears an extension (41), to which the respective strut section (31...34) is fastened.

13. Separating device according to Claim 11, **characterised in that** in one position of the hinge (30), in which the extensions (41) of the hinge plates (35) lie on a straight line, the hinge axis (51) is laterally displaced relative to the extensions (41), i.e. as measured in a plane, on which the hinge axis (51) stands perpendicular.

14. Separating device according to Claim 3, **characterised in that** the hinge (30) is lockable in at least one position.

15. Separating device according to Claim 3, **characterised in that** the hinge (30) is detachably lockable by positive locking.

16. Separating device according to Claim 15, **characterised in that** the position corresponds to the extended strut (19, 21).

17. Separating device according to Claims 11 and 15, **characterised in that** the hinge plates (35) contain openings (48), which are flush with one another in the locking position, and that a bolt (63), which may be inserted into the openings (48), is provided for locking.

18. Separating device according to Claim 17, **characterised in that** the bolt (63) is prestressed into the pushed forward position by means of a spring (64).

19. Separating device according to Claim 17, **characterised in that** an operating member (65) disposed in the region of one of the hinge plates (35) is provided for the bolt (63).

20. Separating device according to Claim 11, **characterised in that** the hinge axis (35) is provided with a crimp (45) extending into the extension (41) for reinforcement.

21. Separating device according to Claim 11, **characterised in that** the extension (41) of each hinge plate (35) is bent at a right angle in such a manner that the extensions (41) run in a common plane, on which the hinge axis (51) stands perpendicular.

22. Separating device according to Claim 11, **characterised in that** each hinge plate (35) contains recesses (46) in its edge.

23. Separating device according to Claim 11, **characterised in that** a shell-like covering (36) is provided for each hinge plate (35).

24. Separating device according to Claim 3, **characterised in that** the strut section (31...34) is tubular.

25. Separating device according to Claim 3, **characterised in that** the strut section (31...34) is formed by a cylindrical tube, and that the tube is flattened in cross-section to receive the extension (41) of the respective hinge plate (35).

26. Separating device according to Claim 3, **characterised in that** the strut section (31...34) is attached at one end to the extension (41) and is caulked with the extension (41) by displacing material of the strut section (31...34) into the recesses (46) on the edge side of the respective extension (41).

27. Separating device according to Claim 3, **characterised in that** the strut sections (31...34) are made of an energy-absorbing, deformable material.

28. Separating device according to Claim 1, **characterised in that** the fabric (14) is formed by a net.

29. Separating device according to Claim 1, **characterised in that** the fabric (14) is made of a perforated foil.

30. Separating device according to Claim 1, **characterised in that** the struts (19, 21) are fastened to the fabric (14) so that they cannot be relatively rotated.

31. Separating device according to Claim 1, **characterised in that** the struts (19, 21) are fastened to the fabric (14) so that they cannot be displaced.

32. Separating device according to Claim 3, **characterised in that** the fabric (14) contains a recess (98) in the region of the respective hinge (30).

33. Separating device according to Claim 1, **characterised in that** it has a securing means (95, 96) to secure the separating device (13) in its stowed position.

34. Separating device according to Claim 33, **characterised in that** the stowing means (95, 96) is formed by an undetachably fastened pocket, in which the separating device (13) is to be stowed.

35. Separating device according to Claim 34, **characterised in that** two flexible pocket walls (95, 96) belong to the pocket, each of which extends along a strut section (33, 34) of one of the two struts (21) and each of which is fastened in the region of the respective strut section (33, 34).

36. Separating device according to Claim 35, **characterised in that** each pocket wall (95, 96) carries one part of a zip fastener.

37. Separating device according to Claim 1, **characterised in that** it has a third strut, which is connected to the fabric (14) and which is configured in the same manner as the other struts (19, 21).

38. Separating device according to Claim 1, **characterised in that** the upper and/or the lower strut (19, 21) is provided with anchoring members (22) at the ends.

39. Separating device according to Claim 38, **characterised in that** at least one of the anchoring members (22) is directed to be longitudinally displaceable with respect to the strut (19).

40. Separating device according to Claim 1, **characterised in that** the lower strut (21) is provided with anchoring members (26) at a distance from its ends.

41. Separating device according to Claim 40, **characterised in that** the anchoring members (26) are in the form of straps or cords.

## Revendications

1. Dispositif de séparation amovible (13) destiné à séparer dans un véhicule automobile une zone de chargement d'un habitacle,
avec un montant supérieur (19) pouvant être accroché de manière amovible dans le véhicule et dont la longueur active peut être réduite de plus qu'au moins 30 % de sa longueur maximale,
avec un montant inférieur (21) pouvant être accroché de manière amovible dans le véhicule et dont la longueur active peut être réduite de plus qu'au moins 30 % de sa longueur maximale, et
avec une partie plane, souple et essentiellement incapable de s'allonger (14), qui est fixée sur les montants supérieur et inférieur (19, 21).

2. Dispositif de séparation selon la revendication 1, **caractérisé en ce que** les montants supérieur et inférieur (19, 21) peuvent être repliés au moins une fois afin de réduire leur longueur réelle.

3. Dispositif de séparation selon la revendication 1, **caractérisé en ce que** les montants inférieur et supérieur (19, 21) comportent chacun, afin de réduire leur longueur réelle, au moins une charnière (30), présentant un axe de charnière (51), qui subdivise le montant considéré (19, 21) en tronçons de montant (31 à 34).

4. Dispositif de séparation selon la revendication 3, **caractérisé en ce que**, dans le cas d'une seule charnière (30) par montant (19, 21), les deux tronçons de montant (31 à 34) de chaque montant (19, 21) sont de même longueur.

5. Dispositif de séparation selon la revendication 3, **caractérisé en ce que** les charnières (30) sont orientées les unes vers les autres de manière à ce que, lorsque le dispositif de séparation (13) est tendu, les deux charnières (30) se trouvent sur une droite qui est perpendiculaire aux deux montants (19, 21) parallèles entre eux.

6. Dispositif de séparation selon la revendication 3, **caractérisé en ce que** les axes de charnière (51), lorsque le dispositif de séparation (13) est tendu, sont de préférence orientés horizontalement.

7. Dispositif de séparation selon la revendication 3, **caractérisé en ce que** les tronçons de montant (31 à 34) voisins de chaque charnière (30) sont décalés par rapport à l'axe de charnière (51) afin que, lorsque le montant (19,21) est replié, ses tronçons de montant (31 à 34) puissent au moins être amenés dans une position où ils sont parallèles entre eux.

8. Dispositif de séparation selon la revendication 3, **caractérisé en ce que** les tronçons de montant (31 à 34) voisins de chaque charnière (30) sont décalés par rapport à l'axe de charnière (51) afin que, lorsque le montant (19,21) est replié, ses tronçons de montant (31 à 34) présentent près de la charnière (30) une distance entre eux alors que les extrémités des tronçons de montant (31 à 34), à leurs extrémités éloignées de la charnière (30), sont jointifs.

9. Dispositif de séparation selon la revendication 8, **caractérisé en ce que** la distance à proximité de la charnière (30) est d'au moins 1,5 cm.

10. Dispositif de séparation selon la revendication 3, **caractérisé en ce que** la charnière (30) est une charnière simple avec seulement un axe de charnière (51).

11. Dispositif de séparation selon la revendication 3, **caractérisé en ce que** la charnière (30) présente deux pattes de charnière (35) qui sont reliées ensemble de manière indissociable par un axe de charnière (51).

12. Dispositif de séparation selon la revendication 11, **caractérisé en ce que** chaque patte de charnière (35) porte une prolongation (41) sur lequel est fixé le tronçon de montant (31 à 34) considéré.

13. Dispositif de séparation selon la revendication 11, **caractérisé en ce que**, dans une position de la charnière (30) dans laquelle les prolongation (41) des pattes de charnière (35) se situent sur une droite, les axes de charnière (51) sont décalés latéralement, ce décalage étant mesuré dans un plan qui est perpendiculaire à l'axe de charnière (51).

14. Dispositif de séparation selon la revendication 3, **caractérisé en ce que** la charnière (30) peut être verrouillée dans au moins une position.

15. Dispositif de séparation selon la revendication 3, **caractérisé en ce que** la charnière (30) peut être verrouillée par obstacle de manière amovible.

16. Dispositif de séparation selon la revendication 15, **caractérisé en ce que** la position correspond à l'extension rectiligne du montant (19, 21).

17. Dispositif de séparation selon les revendications 11 et 15, **caractérisé en ce que** les pattes de charnière (35) présentent des ouvertures (48) qui sont alignées dans la position de verrouillage et **en ce qu'**il est prévu pour le verrouillage un goujon (63) pouvant être engagé dans les ouvertures (48).

18. Dispositif de séparation selon la revendication 17, **caractérisé en ce que** le goujon (63) est précontraint par un ressort (64) dans sa position avancée.

19. Dispositif de séparation selon la revendication 17, **caractérisé en ce que** le goujon (64) est associé à un organe de manoeuvre (65) qui est monté au niveau de l'une des pattes de charnière (35).

20. Dispositif de séparation selon la revendication 11, **caractérisé en ce que** la patte de charnière (35) est dotée, pour son renforcement, d'une nervure (45) qui s'étend dans la prolongation (41).

21. Dispositif de séparation selon la revendication 11, **caractérisé en ce que** la prolongation (41) de chaque patte de charnière (35) est coudée, de telle manière que les prolongations (41) se situent dans un plan commun auquel l'axe de charnière (51) est perpendiculaire.

22. Dispositif de séparation selon la revendication 11, **caractérisé en ce que** chaque patte de charnière (35) présente sur son bord des encoches (46).

23. Dispositif de séparation selon la revendication 11, **caractérisé en ce que** chaque patte de charnière (35) est associée à un couvercle (36) en forme de coque.

24. Dispositif de séparation selon la revendication 3, **caractérisé en ce que** les tronçons de montant (31 à 34) sont de forme tubulaire.

25. Dispositif de séparation selon la revendication 3, **caractérisé en ce que** les tronçons de montant (31 à 34) sont formés d'un tube cylindrique et **en ce que** le tube est aplati en section afin de recevoir la prolongation (41) de la patte de charnière (35) considérée.

26. Dispositif de séparation selon la revendication 3, **caractérisé en ce que** les tronçons de montant (31 à 34), par l'une de leurs extrémités, sont enfichés sur la prolongation (41) et sont matés sur la prolongation (41), si bien que de la matière du tronçon de montant (31 à 34) est refoulée dans les encoches (46) marginales de la prolongation (41) considérée.

27. Dispositif de séparation selon la revendication 3, **caractérisé en ce que** les tronçons de montant (31 à 34) sont faits dans un matériau pouvant se déformer en absorbant de l'énergie.

28. Dispositif de séparation selon la revendication 1, **caractérisé en ce que** la partie plane (14) est constituée d'un filet.

29. Dispositif de séparation selon la revendication 1, **caractérisé en ce que** la partie plane (14) est formée d'un film perforé.

30. Dispositif de séparation selon la revendication 1, **caractérisé en ce que** les montants (19, 21) sont fixés sur la partie plane (14) sans pouvoir tourner.

31. Dispositif de séparation selon la revendication 1, **caractérisé en ce que** les montants (19, 21) sont fixés sur la partie plane (14) sans pouvoir coulisser.

32. Dispositif de séparation selon la revendication 3, **caractérisé en ce que** la partie plane (14) présente une découpe (98) au niveau de chacune des charnières (30).

33. Dispositif de séparation selon la revendication 1, **caractérisé en ce qu'**il comporte un dispositif de fixation (95, 96) afin de fixer le dispositif de séparation dans sa position de rangement.

34. Dispositif de séparation selon la revendication 33, **caractérisé en ce que** le dispositif de rangement (95, 96) est formé d'une pochette fixée de manière imperdable dans laquelle le dispositif de séparation (13) doit être rangé.

35. Dispositif de séparation selon la revendication 34, **caractérisé en ce que** la pochette comprend deux parois de pochette flexibles (95, 96), chacune s'étendant le long d'un tronçon de montant (33, 34) de l'un des deux montants (21) et chacune pouvant être fixée au niveau du tronçon de montant (33, 34) considéré.

36. Dispositif de séparation selon la revendication 35, **caractérisé en ce que** chaque paroi de pochette (95, 96) porte une partie d'une fermeture à glissière.

37. Dispositif de séparation selon la revendication 1, **caractérisé en ce qu'**il comporte un troisième montant qui est reliés à la partie plane (14) et qui est construit de la même manière que les autres montants (19, 21).

38. Dispositif de séparation selon la revendication 1, **caractérisé en ce que** le montant supérieur et/ou le montant inférieur (19, 21) sont dotés à leurs extrémités d'éléments d'ancrage (22).

39. Dispositif de séparation selon la revendication 38, **caractérisé en ce qu'**au moins l'un des éléments d'ancrage (22) est guidé de manière à pouvoir coulisser longitudinalement par rapport au montant (19).

40. Dispositif de séparation selon la revendication 1, **caractérisé en ce que** le montant inférieur (21) est doté à une certaine distance de ses extrémités d'éléments d'ancrage (26).

41. Dispositif de séparation selon la revendication 40, **caractérisé en ce que** les éléments d'ancrage (26) prennent la forme de sangles ou de cordons.
